Europäisches Patentamt

European Patent Office

Office européen des brevets

(19)

(11) Publication number: **0 195 653 B1**

# EUROPEAN PATENT SPECIFICATION

(12)

(45) Date of publication of patent specification: **15.07.92**

(51) Int. Cl.⁵: **A01G 9/10**, A01C 3/04, A01C 1/04

(21) Application number: **86301988.1**

(22) Date of filing: **18.03.86**

(54) **Pivotally linked rigid cell chains.**

(30) Priority: **19.03.85 AU 9818/85**
     **06.11.85 AU 3301/85**

(43) Date of publication of application:
     **24.09.86 Bulletin 86/39**

(45) Publication of the grant of the patent:
     **15.07.92 Bulletin 92/29**

(84) Designated Contracting States:
     **AT BE CH DE FR GB IT LI LU NL SE**

(56) References cited:
     **EP-A- 0 010 824      EP-A- 0 097 735**
     **AU-B- 516 117        FR-A- 2 407 664**
     **US-A- 2 197 594      US-A- 4 167 911**

(73) Proprietor: **WILLIAMES HI-TECH INTERNA-TIONAL PTY. LIMITED**
     **Wills Street**
     **Warragul Victoria 3820(AU)**

(72) Inventor: **Williames, Geoffrey Alan**
     **337 Normanby Street**
     **Warragul Victoria(AU)**

(74) Representative: **Boydell, John Christopher**
     **Stevens, Hewlett & Perkins 1 Serjeants' Inn**
     **Fleet Street**
     **London EC4Y 1LL(GB)**

## Description

The present invention relates to connected individual cells intended for use in the mechanized propagation of seeds and the handling of plants propagated therein. In particular the invention relates to a cell as described in our Australian Patent Specification No. 516,117.

These connected individual cells are commonly known as "cell chains". Cell chains are known wherein the cells are each tubular cylindrical constructions of substantially uniform cross-section with pivot connections formed between adjacent cells. These chains are moved between desired locations by drive sprocket wheels engaging essentially between the tubular cells with the open face of the cell directed upwardly to receive propagating material and a seed. While these cell chains are effective in operation they do suffer from certain practical disadvantages. Cell chains of this type because of their pivot arrangements between cells are stored in a circular spiral manner which take up considerable space both between individual cells and by the fact that a circular array of cells leaves substantial areas which cannot be occupied by cells.

U.S. Patent Specification No. 4,167,911 discloses a plurality of individual cells, each of which is joined to the next adjacent cell by a thin, deliberately weakened paper or film connector. Not only are the connectors formed of weakened paper or film, but the cells themselves are formed of paper of the kind that is rottable or degradable, thereby enabling each individual cell to be separated from its adjacent cells and planted along with the seedling and its propagating medium. The disclosure is therefore such as to provide a plurality of containers which are initially linked by a weak connecting link but are subsequently separated and therefore consumed during seedling planting.

The objective of the present invention is therefore to provide a reusable cell chain arrangement which will overcome or substantially minimise the aforementioned disadvantages associated with the known arrangements.

Accordingly, the present invention provides a device for use in propagating plants comprising a plurality of open top individual cells joined to one another in an elongate row, said device being characterised in that the open top individual cells are held together in a rigid group (10) having opposed ends, first hinge means (12') carried at one end of said group (10), second hinge means (20, 21b) carried at an opposite end of said group (10), the first hinge means (12') at said one end of said group (10) being engageable with the second hinge means (20, 21b) of a like said group (11) to form a hinge connection (13) to enable pivotal coupling of said groups together whereby said first and second hinge means (12', 20, 21b) enables said one group (10) to pivot relative to an adjacent said like group (11) when interconnected in at least one direction through an arc of such length as to locate said one group (10) and said adjacent like group (11) substantially parallel to one another in side by side relation.

Preferably, the individual cells in each group of cells are arranged in a straight line and the arrangement is such as to allow groups of cells to lie side by side in storage positions to make up a rectangular array of individual cells.

In a further aspect of the invention, there is provided a cell chain including a plurality of containers for holding seeds or seedlings and propagating medium therein, the containers being interconnected by at least one link formed and located in such a way that a tooth of a toothed driving means may interengage the link and/or the containers for moving the cell chain from one point to another.

The cross sectional shape of the containers may vary from circular, hexagonal, square or the like depending upon the desired mode of stacking and use of the invention, and the invention is not limited to any specific container shape.

The chain can be easily produced as a plastics moulding. The containers may be formed with a bottom or alternatively, with inwardly tapered walls to prevent loss of soil therein.

The containers may be shaped with hexagonal cross section thereby facilitating close stacking in straight lines.

The cell chain may consist of a series of cells or plant compartments rigidly connected to form rigid groups containing a number of cells. Each group may be pivoted at either end using a link cell which will allow the previous and the following group to pivot about each other. In this way a continuous chain of alternating cell groups and links can be concertined into a solid block of cells to allow ease of handling and storage.

The cell chain may be broken at any point where a link cell exists.

The plant cells may vary in shape and size between derivatives of the cell chain. Some possibilities include conical shapes, cylinders and tapered hexagons. Provision can be made between each cell for engagement with a toothed driving means when the chain is straightened into a single strand.

The link cell is uniquely designed to allow the rigid cell groups to hinge in either direction but still allow the cells to nest against each other to form a pack of hexagonal cells to appear as a solid sheet of honeycomb.

The unique feature of the product is that in the packed configuration the container forms a rectangular mass able to maximize the use of space and fit in with standard horticultural practice in existing glass houses. When hinged apart (or straightened) the pack transforms into a single line of hinged cell groups of hexagonal cells, able to be mechanically handled at high speed in single file to select and transplant the soil block (plug) and plant at high speed.

The invention may be better understood from the following description of preferred embodiments given in relation to the accompanying drawings. In the drawings:-

Figure 1 is a perspective sketch of a hinge section between groups of connected cells of a first preferred embodiment.

Figures 2a and 2b are plan views demonstrating schematically the 'wrapping' action of the cell chain to form a solid tray.

Figure 3 is a plan view of rigid groups of cells forming a concertina.

Figures 4a, 4b and 4c show elevations of a rigid cell chain group.

Figures 5a, 5b and 5c show elevations of a cell chain link.

Figure 6 is a bottom perspective view showing a hinge connection region in greater detail.

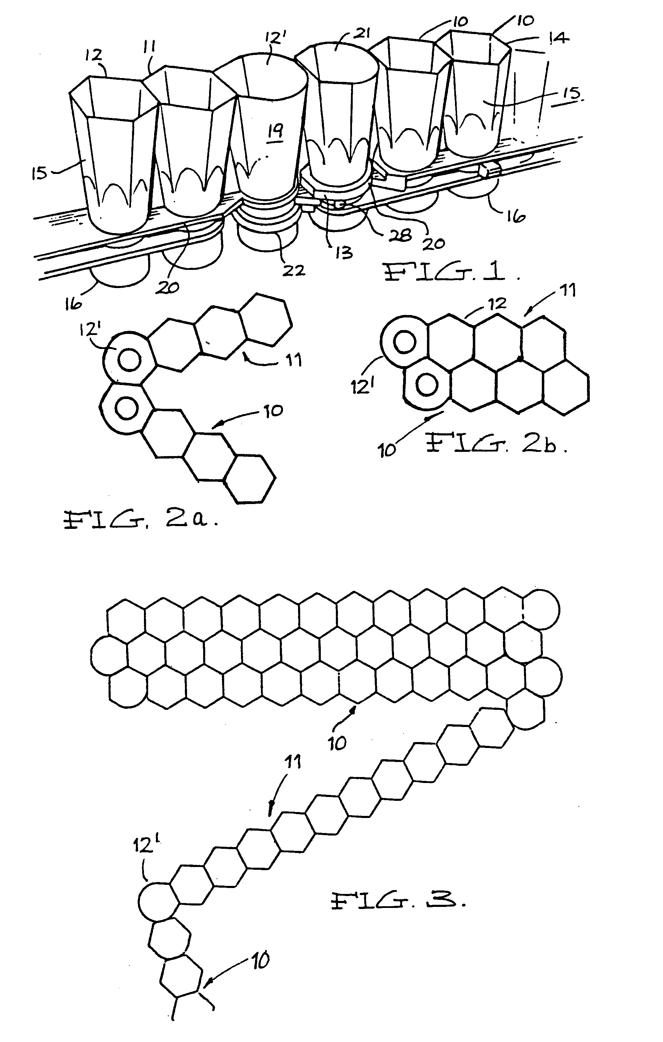

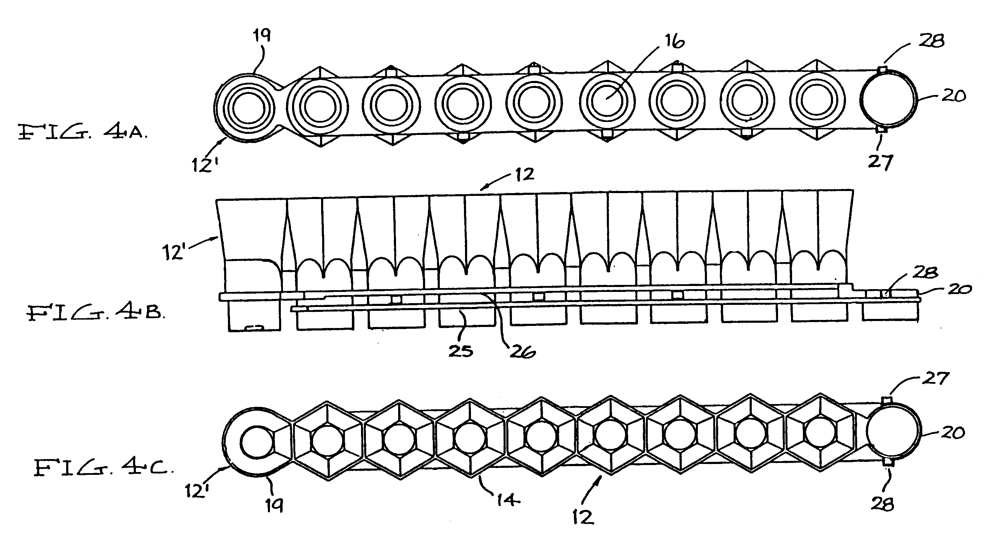

Referring to Figures 1, and 4 a, b and c there is partially shown two groups 10, 11 of rigidly connected individual plant propagation cells 12 connected by a hinge element 13. Each of the cells has a polygonal, preferably regular/hexagonal open upper face 14 with a hollow body 15 tapering downwardly to a drainage opening 16 in the base of the cell. The drainage opening 16 comprises a restricted passage 17 together with a widening lower section 18.

Each group of cells 10, 11 comprise cells 12 arranged rigidly in line. The number of cells in each group may be variable. The last cell 12' in each group has a curved outer face 19 allowing for pivoting movement of the group relative to the hinge element 13 as will hereinafter be explained. The other end of the group includes a pivot connecting collar 20 enabling the group to be hingedly connected to the hinge element 13.

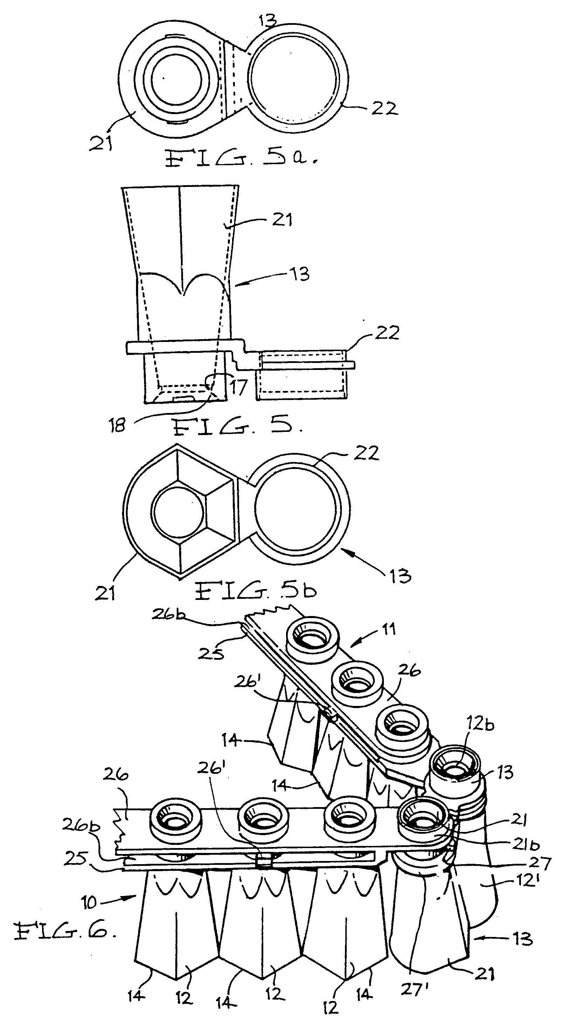

The hinge element 13 is shown in greater detail in Figures 5 a, b and c. The hinge element preferably comprises a single propagation cell 21 with a connecting hinge collar 22 equivalent to the collar 20 of the cell groups. Thus a double pivot hinge is formed between the adjacent cell groups 10, 11. The rigid element 12 has stop means 27, 28 arranged to limit pivoting movement but permitting pivoting in both directions from the centre line of the rigidly connected cells to a degree sufficient to allow the groups of cells to lie adjacent one another in a stcorage position.

As is apparent from the Figures, the individual cells 12 are interconnected in each group by a pair of rigid webs 25, 26. The polygonal upper face of the cells are so arranged whereby adjacent groups of cells are adapted to nest into one another with substantially no space between adjacent cells. In this manner a substantially rectangular array of cells can be formed in a storage position with minimum wastage of space. There may also be provided lugs or other extending projections from between the rigid connecting webs 25, 26 to locate between adjacent webs 25, 26 of a second group of propagation cells when the respective groups are positioned next to one another in a storage position. This arrangement locks the groups together so that in the storage position the open faces 14 of the individual cells are all ensured to be located in the same plane. This is best shown in Figures 2 a, b and 3.

Figure 6 shows a slightly modified form of the invention comprising a number of rigidly interconnected individual cells 12 having essentially hexagonal upper faces 14 forming rigid groups of in line cells 10 and 11. A hinge element 13 joins the two groups. The hinge element comprises a cell 21 having a base section 21 press fitted but retained for pivoting movement within a retaining ring 21b rigidly formed at the end of the group 10 of the rigidly connected cells. The hinge element 13 further includes a ring or collar 13' extending laterally from the cell 21 which press fits in a pivoting manner over the base section 12b of the end cell 12' of the rigid group of cells 11. In this manner, a double hinge connection is formed. A pair of web structures 25 and 26 hold the cells 12, 12' together and lateral projections 26' are provided between the webs and extending outwardly beyond the webs to be located within the space 26b between the webs when the groups of cells are folded to be nested into one another in side by side relationship. As will be seen in Figure 6, a pair of stop projections 27 (only one of which can be seen) are provided on a flange section 27' of the rigid element 12. The stop projections limit the rotation of the hinge element to substantially equal amounts on either side of the centre line of the group of cells 10 and 11. In other respects the embodiment of Figure 6 is essentially similar to the embodiment illustrated in Figures 1 to 5.

## Claims

1. A device for use in propagating plants comprising a plurality of open top individual cells joined to one another in an elongate row, said device being characterized in that the open top individual cells are held together in a rigid group (10) having opposed ends, first hinge means (12') carried at one end of said group (10), second hinge means (20, 21b) carried at an opposite end of said group (10), the first hinge means (12') at said one end of said group (10) being engagable with the second hinge means (20, 21b) of a like said group (11) to form a hinge connection (13) to enable pivotal coupling of said groups together whereby said first and second hinge means (12', 20, 21b) enables said one group (10) to pivot relative to an adjacent said like group (11) when interconnected in at least one direction through an arc of such length as to locate said one group (10) and said adjacent like group (11) substantially parallel to one another in side by side relation.

2. A device according to claim 1 characterized in that said one group (10) is interconnected to said adjacent group (11) by said hinge connection (13).

3. A device according to claim 2 characterized in that said hinge connection enables said adjacent group (11) to extend in prolongation of said one group (10) along a straight line.

4. A device according to claim 2 characterized in that the cells (12) of said groups (10, 11) are staggered when said groups (10, 11) are pivoted to extend alongside and substantially parallel to one another.

5. A device according to claim 2 characterized in that said hinge connection (13) enables said one group (10) to pivot relative to the adjacent said group (11) in either of two opposite directions to locate said one group (10) and said adjacent group (11) in substantially parallel, side-by-side relation.

6. A device according to claim 2 characterized in that said hinge connection (13) includes limit means (27, 28) for limiting relative pivotal movement of said adjacent groups (10, 11).

7. A device, according to claim 2 characterized in that each of said groups (10, 11) has an endmost cell (12') formed with an arcuate external surface (19).

8. A device according to claim 7 characterized in that said endmost cell (12') is at one end only of the associated group (10, 11).

9. A device according to claim 2 characterized in that said hinge connection (13) includes a collar (20, 21b) in which a lower end of an endmost one of said cells (12') is rotatably accommodated.

10. A device according to claim 9 characterized in said hinge conncection (13) includes a collar (22) carried by and projecting from a cell (21) having its lower end rotatably accommodated in said collar (20, 21b).

11. A device according to claim 1 characterized in that said first hinge means comprises a collar (20, 21b) extending beyond one end of said first group (10).

12. A device according to claim 11 characterized in that hinge means comprises a cell (12') having a sleeve at its lower end of such size as rotatably to be accommodated in said collar (20, 21b).

13. A device according to claim 11 characterized in that said first hinge means further includes a hinge element comprising a cell (21) having a lower end pivotably engaged with said collar (20, 21b) and a second collar (22) extending from said cell (21).

14. A device according to claim 1 characterized in that a coupling element (13) is pivotably connected to said second hinge means (20, 21b), said coupling element being adapted for pivotal connection to the first hinge means (12') of a like said group.

15. A device according to any one of claims 1 to 14 characterized in that said one group (10) includes at least one engagement member (26') co-operable with retainer means (25, 26) of an adjacent said like group when said groups are arranged parallel to one another in side-by-side relation.

**Revendications**

1. Dispositif pour la propagation des plantes comportant une série de cellules individuelles ouvertes reliées l'une à l'autre en rangée longitudinale, le dit dispositif étant caractérisé en ce que les cellules individuelles ouvertes sont maintenues ensemble en groupe rigide (10) ayant des extrémités opposées, des premiers moyens à charnière (12') à une extrémité dudit groupe (10), des deuxièmes moyens à charnière (20, 21) à l'extrémité opposée dudit groupe (10), les premiers moyens à charnière (12') à l'une extrémité dudit groupe admettant la prise avec les deuxièmes moyens à charnière (20,21b) d'un groupe identique (11) pour former un raccord à charnière (13) permettant l'accouplement pivotant desdits groupes ensemble selon lequel les premiers et deuxièmes moyens à charnière (12',20,21b) permettent à un groupe (10) après le raccord de pivoter par rapport à un groupe voisin (11) en un sens au minimum en arc de cercle de telle longueur à situer ledit groupe (10) et le deuxième groupe identique (11) essentiellement parallèles l'un à l'autre en rapport côte à côte.

2. Dispositif selon la revendication 1 caractérisé en ce qu'un groupe (10) est interconnecté au groupe voisin (11) par le raccord à charnière (13).

3. Dispositif selon la revendication 2 caractérisé en ce que ledit raccord à charnière permet de situer le groupe adjacent (11) en ligne droite dans la prolongation dudit groupe (10).

4. Dispositif selon la revendication 2 caractérisé en ce que les cellules (12) desdits groupes (10,11) sont alternées lorsque lesdits groupes (10,11) sont pivotés pour venir en sens essentiellement parallèle le long l'un de l'autre.

5. Dispositif selon la revendication 2 caractérisé en ce que ledit raccord à charnière (13) permet à un groupe (10) par rapport à l'autre groupe (11) de pivoter en l'un ou l'autre de deux sens opposés pour situer un groupe (10) et le groupe voisin (11) en rapport essentiellement parallèle côte à côte.

6. Dispositif selon la revendication 2 caractérisé en ce que ledit raccord à charnière (13) comporte des moyens de butée (27,28) limitant le mouvement relatif de pivotement desdits groupes adjacents (10,11).

7. Dispositif selon la revendication 2 caractérisé en ce que chacun desdits groupes (10,11) prévoit une cellule extrême (12') comportant une surface extérieure en arc (19) de cercle.

8. Dispositif selon la revendication 7 caractérisé en ce que ladite cellule extrême est située à une seule extrémité du groupe associé (10,11).

9. Dispositif selon la revendication 2 caractérisé en ce que ledit raccord à charnière (13) prévoit un collier (20,21) dans lequel une extrémité inférieure d'une des cellules extrêmes (12') est prévue rotative.

10. Dispositif selon la revendication 9 caractérisé en ce que ledit raccord à charnière (13) prévoit un collier (22) dont l'extrémité inférieure est prévue rotative dans ledit collier (20,21).

11. Dispositif selon la revendication 1 caractérisé en ce que lesdits premiers moyens à charnière comportent un collier (20,21) allant au delà d'une extrémité dudit premier groupe (10).

12. Dispositif selon la revendication 11 caractérisé en ce que les moyens à charnière comportent une cellule (12') ayant une chemise à son extrémité inférieure de dimension telle à être admise dans ledit collier (20,21).

13. Dispositif selon la revendication 11 caractérisé en ce que les premiers moyens à charnière comportent en outre un élément à charnière prévoyant une cellule (21) ayant une extrémité inférieure faisant prise pivotante avec ledit collier (20,21) et un deuxième collier (22) dans le prolongement de ladite cellule (21).

14. Dispositif selon la revendication 1 caractérisé en ce qu'un élément d'accouplement (13) est en raccord pivotant avec les deuxièmes moyens à charnière (20,21b), ledit élément d'accouplement étant prévu pour le raccord pivotant avec les premiers moyens à charnière (12') d'un groupe identique.

15. Dispositif selon l'une ou l'autre des revendications 1 à 14 caractérisé en ce qu'un groupe (10) prévoit au minimum un élément de prise (26') fonctionnant avec les moyens de retenue (25,26) d'un groupe adjacent identique lorsque lesdits groupes sont disposés parallèles l'un à l'autre en rapport côte à côte.

**Patentansprüche**

1. Vorrichtung zur Verwendung um Pflanzen zu vermehren, die eine Vielzahl von einzelnen, oben offenen Zellen umfasst, die miteinander in einer langgestreckten Reihe verbunden sind, wobei die Vorrichtung dadurch gekennzeichnet ist, dass die einzelnen, oben offenen Zellen in einer stabilen Gruppe (10) mit entgegengesetzten Enden zusammengehalten werden, mit einem ersten Gelenk (12'), das an einem Ende der Gruppe (10) getragen wird, einem zweiten Gelenk (20, 21b), das an dem entgegengesetzten Ende der Gruppe (10) getragen wird, wobei das erste Gelenk (12') an dem einen Ende der Gruppe (10) mit dem zweiten Gelenk (20, 21b) einer gleichen solchen Gruppe (11) in Verbindung gebracht werden kann, um eine Gelenkverbindung (13) zu bilden, um schwenkbare Verbindung der Gruppen miteinander zu ermöglichen, wobei das erste und zweite Gelenk (12', 20, 21b) die eine Gruppe (10) befähigt, relativ zu einer benachbarten gleichen Gruppe (11) zu schwenken, wenn sie in wenigstens einer Richtung durch einen Bogen solcher Länge miteinander verbunden sind, um die eine Gruppe (10) und die benachbarte gleiche Gruppe (11) im wesentlichen parallel zueinander in einer nebeneinanderliegenden Beziehung anzuordnen.

2. Vorrichtung nach Anspruch 1, dadurch gekennzeichnet, dass die eine Gruppe (10) mit der benachbarten Gruppe (11) durch die Gelenkverbindung (13) verbunden ist.

3. Vorrichtung nach Anspruch 2, dadurch gekennzeichnet, dass die Gelenkverbindung die benachbarte Gruppe (11) befähigt, sich zur Verlängerung der einen Gruppe (10) längs einer geraden Linie zu erstrecken.

4. Vorrichtung nach Anspruch 2, dadurch gekennzeichnet, dass die Zellen (12) der Gruppen (10, 11) versetzt angeordnet sind, wenn die Gruppen (10, 11) schwenkbar gelagert sind, um sich nebeneinander und im wesentlichen parallel zueinander zu erstrecken.

5. Vorrichtung nach Anspruch 2, dadurch gekennzeichnet, dass die Gelenkverbindung (13) die eine Gruppe (10) befähigt, relativ zu der benachbarten Gruppe (11) in irgendeine von zwei entgegengesetzten Richtungen zu schwenken, um die eine Gruppe (10) und die benachbarte Gruppe (11) in einer im wesentlichen parallelen, nebeneinanderliegenden Beziehung anzuordnen.

6. Vorrichtung nach Anspruch 2, dadurch gekennzeichnet, dass die Gelenkverbindung (13) ein Begrenzungsmittel (27, 28) einschliesst, um relative Schwenkbewegung der benachbarten Gruppen (10, 11) zu begrenzen.

7. Vorrichtung nach Anspruch 2, dadurch gekennzeichnet, dass jede der Gruppen (10, 11) eine entfernteste Zelle (12') hat, die mit einer gekrümmten äusseren Oberfläche (19) gebildet ist.

8. Vorrichtung nach Anspruch 7, dadurch gekennzeichnet, dass die entfernteste Zelle (12') nur an einem Ende der zugeordneten Gruppe (10, 11) liegt.

9. Vorrichtung nach Anspruch 2, dadurch gekennzeichnet, dass die Gelenkverbindung (13) einen Bund (20, 21b) einschliesst, in dem ein unteres Ende einer entferntesten Zelle (12') drehbar angeordnet ist.

10. Vorrichtung nach Anspruch 9, dadurch gekennzeichnet, dass die Gelenkverbindung (13) einen Bund (22) einschliesst, der von einer Zelle (21) getragen wird und davon hervorragt, welche ihr unteres Ende drehbar in dem Bund (20, 21b) angeordnet hat.

11. Vorrichtung nach Anspruch 1, dadurch gekennzeichnet, dass das erste Gelenk einen Bund (20, 21b) umfasst, der sich über ein Ende der ersten Gruppe (10) hinaus erstreckt.

12. Vorrichtung nach Anspruch 11, dadurch gekennzeichnet, dass das Gelenk eine Zelle (12') umfasst, die an ihrem unteren Ende eine Hülse mit einer derartigen Grösse hat, um drehbar in dem Bund (20, 21b) angeordnet zu werden.

13. Vorrichtung nach Anspruch 11, dadurch gekennzeichnet, dass das erste Gelenk weiterhin ein Gelenkelement einschliesst, das eine Zelle (21) mit einem unteren Ende umfasst, welches schwenkbar mit dem Bund (20, 21b) verbunden ist, und einen zweiten Bund (22), der sich von der Zelle (21) erstreckt.

14. Vorrichtung nach Anspruch 1, dadurch gekennzeichnet, dass ein Verbindungselement (13) mit dem zweiten Gelenk (20, 21b) schwenkbar verbunden ist, wobei das Verbindungselement zur Schwenkverbindung mit dem ersten Gelenk (12') einer gleichen solchen Gruppe angeordnet ist.

15. Vorrichtung nach einem der Ansprüche 1 bis 14, dadurch gekennzeichnet, dass die eine Gruppe (10) wenigstens ein Eingriffsglied (26') einschliesst, das mit dem Abstandhalter (25, 26) einer benachbarten solchen gleichen Gruppe zusammenwirken kann, wenn die Gruppen parallel zueinander in einer nebeneinanderliegenden Beziehung angeordnet sind.

FIG. 1.

FIG. 2a.

FIG. 2b.

FIG. 3.

FIG. 4A.

FIG. 4B.

FIG. 4C.

EP 0 195 653 B1

FIG. 5a.

FIG. 5.

FIG. 5b

FIG. 6.